(19) Europäisches Patentamt
European Patent Office
Office européen des brevets

(11) **EP 4 571 229 B1**

(12) **EUROPEAN PATENT SPECIFICATION**

(45) Date of publication and mention
of the grant of the patent:
**22.07.2026 Bulletin 2026/30**

(21) Application number: **24210996.5**

(22) Date of filing: **05.11.2024**

(51) International Patent Classification (IPC):
*F27B 9/04* (2006.01)    *F27B 9/10* (2006.01)
*F27B 9/14* (2006.01)    *F27B 17/02* (2006.01)
*B22F 9/08* (2006.01)    *B22F 9/10* (2006.01)
*C22C 1/10* (2023.01)    *C22C 29/12* (2006.01)
*C03B 19/10* (2006.01)    *C22C 32/00* (2006.01)

(52) Cooperative Patent Classification (CPC):
**F27B 9/10; B22F 9/08; B22F 9/10; C22C 1/1036;**
**C22C 1/1042; C22C 1/1047; F27B 9/047;**
**F27B 9/142; F27B 17/02;** C03B 19/102;
C03B 19/1025; C22C 29/12; C22C 32/0021

(54) **VERTICAL TUBE FURNACE FOR OBTAINING NON-METAL-METAL EUTECTIC MATERIAL IN THE FORM OF MICROSPHERES AND METHOD FOR OBTAINING NON-METAL-METAL EUTECTIC MATERIAL IN THE FORM OF MICROSPHERES**

VERTIKALER ROHROFEN ZUR HERSTELLUNG EINES NICHTMETALL-METALL-EUTEKTIKMATERIALS IN FORM VON MIKROSPHÄREN SOWIE VERFAHREN ZUR HERSTELLUNG EINES NICHTMETALL-METALL-EUTEKTIKMATERIALS IN FORM VON MIKROSPHÄREN

FOUR TUBULAIRE VERTICAL POUR L'OBTENTION D'UN MATÉRIAU EUTECTIQUE NON-MÉTAL-MÉTAL SOUS FORME DE MICROSPHÈRES, ET PROCÉDÉ D'OBTENTION D'UN MATÉRIAU EUTECTIQUE NON-MÉTAL-MÉTAL SOUS FORME DE MICROSPHÈRES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.11.2023 PL 44683323**
**31.10.2024 PL 45019124**

(43) Date of publication of application:
**18.06.2025 Bulletin 2025/25**

(73) Proprietor: **Ensemble3 spolka z ograniczona odpowiedzialnoscia**
**01-919 Warszawa (PL)**

(72) Inventors:
• **Sadecka, Katarzyna**
**01-926 Warszawa (PL)**
• **Paszke, Piotr**
**64-361 Miedzichowo (PL)**

• **Pawlak, Dorota Anna**
**01-885 Warszawa (PL)**

(74) Representative: **JD&P Patent Attorneys**
**Joanna Dargiewicz & Partners**
**ul. Mysliborska 93A/50**
**03-185 Warszawa (PL)**

(56) References cited:
**CN-A- 104 086 074    CN-A- 110 054 396**

• **WARD JONATHAN ET AL: "Short vertical tube furnace for the fabrication of doped glass microsphere lasers", REVIEW OF SCIENTIFIC INSTRUMENTS, AMERICAN INSTITUTE OF PHYSICS, 2 HUNTINGTON QUADRANGLE, MELVILLE, NY 11747, vol. 81, no. 7, 15 July 2010 (2010-07-15), pages 73106 - 73106, XP012145915, ISSN: 0034-6748, DOI: 10.1063/1.3455198**

**Description**

The subject of the invention is a vertical tube furnace for obtaining eutectic material in the form of microspheres and a method for obtaining non-metal-metal eutectic material in the form of microspheres The invention has applications in photonics and in plasmonics, which is based on the use of vibrations of free carriers in metallic structures in interactions with an electromagnetic wave. The invention may have applications in a wide variety of fields, such as energy conversion, energy storage, protection of documents and other objects, 3D printing and others.

From the publication by Jonathan M. Ward et al; Short vertical tube furnace for the fabrication of doped glass microsphere lasers; Review of Scientific Instruments 81, 073106, 2010, an electric tube furnace is known that can be used to fabricate lasers based on doped glass microspheres. The tube furnace has a short hot zone length of 133 mm and is based on a quartz tube structure. Particles of doped laser glass, in particular Er:Yb IOG-2 phosphate glass, with a diameter of 1 m are blown into the furnace using a 60 mL syringe, and microspheres between 10 and 400 m in size are collected at the exit of the tube furnace in a Petri dish.

Chinese patent application publication CN 104 086 074 A discloses a preparation device for chalcogenide glass microspheres and a preparation method thereof, comprising a gas cylinder, a first rubber hose, a second rubber hose, and a buffer device, the bottom of which is sealed and connected to the top of a quartz tube, the quartz tube is vertically arranged and located in the furnace cavity of the heating furnace, the bottom of the quartz tube protrudes from the heating furnace and is sealed and connected to a microsphere collection device, and the microsphere collection device is placed in a cooling inside the device

On the other hand, Chinese patent application publication CN 110 054 396 A discloses a device for producing 2S2G chalcogenide glass microspheres, comprising a funnel at the top and a vertical molding cavity connected with the bottom end of the funnel, the molding cavity is inserted into a furnace cavity located in a heating furnace.

From the state of the art, there are no known high-temperature devices for producing non-metal-metal eutectic materials in the form of microspheres. Known devices based on similar operation do not have a material feeder that can continuously supply the feed material to the process tube.

The aim of the invention was to develop a design for a vertical tube furnace that enables the production of eutectic materials in the form of microspheres, e.g. $Bi_2O_3$-Ag, $ZnO$-$ZnWO_4$, $SrTiO_2$-$TiO_3$, whose eutectic temperature is in the temperature range 600-1700°C.

The scope of the present invention is defined by independent claims 1 and 7, and further embodiments of the invention are specified in dependent claims 2-6 and 8-10.

The unit consists of these interconnected assemblies:

- furnace assembly **1,**
- gas heater assembly **4,**
- gas feed assembly **3,**
- outlet heater **2,**
- material feeder **5,**
- water cooler (water/air exchanger) **6,**

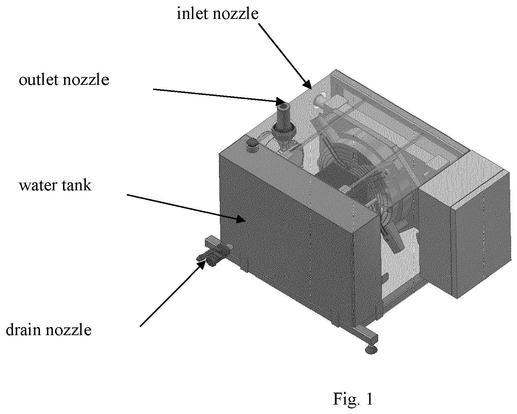

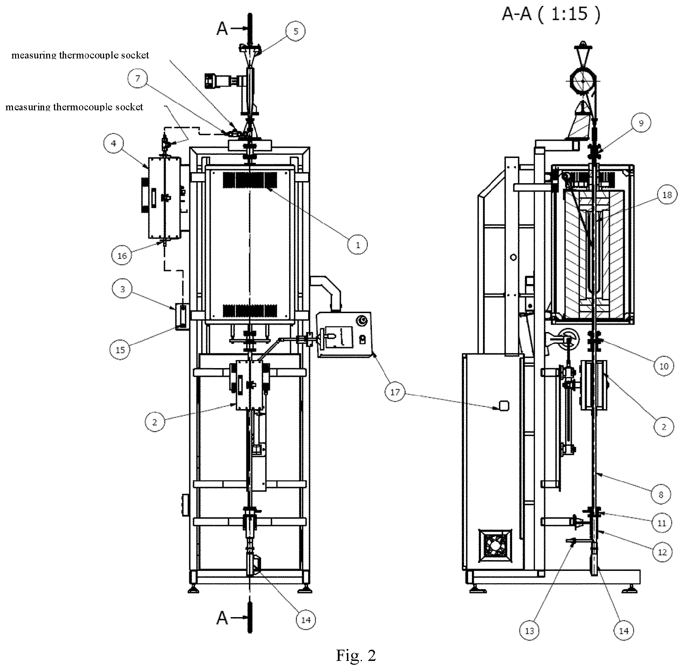

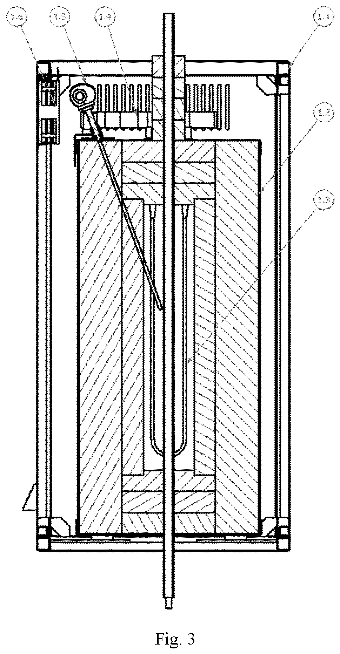

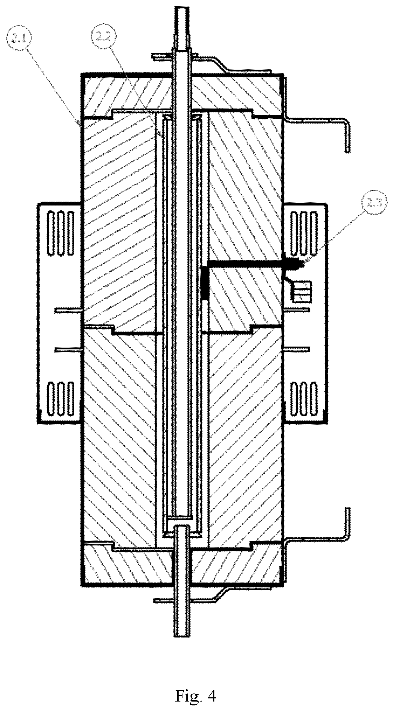

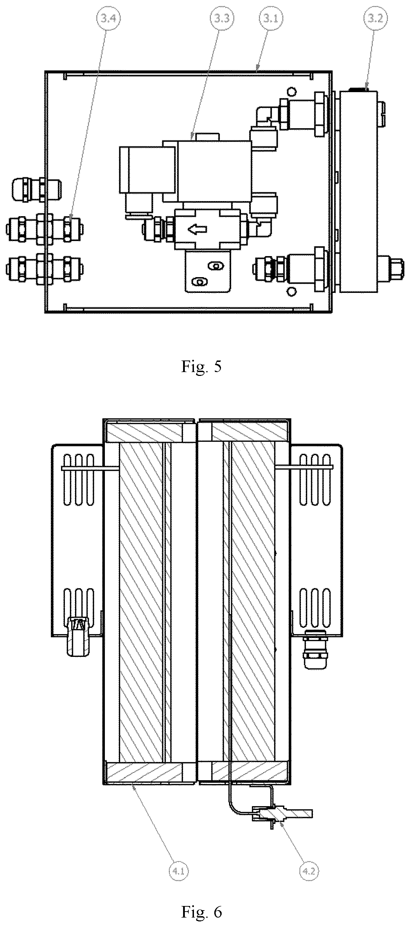

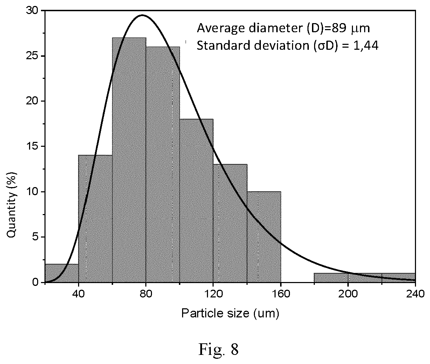

The invention is illustrated in the following manufacturing examples and in the drawing, where fig. 1 shows a water cooler while fig. 2 shows the construction of a vertical tube furnace, high-temperature type PRC 12x500/170MV; fig. 3 shows the furnace unit **(1),** fig. 4 shows the gas heater assembly **(4);** fig. 5 shows the gas feed unit **(3),** fig. 6 shows the outlet heater **(2);** fig. 7 shows the material feeder **(5);** fig. 8 shows a histogram of the size distribution of the microsphere particles obtained.

**Example 1**

The furnace unit **1** is used to heat a ceramic process pipe **18** with an outer diameter of φ20mm, which is embedded vertically in its interior. The furnace is constructed in such a way as to enable the aforementioned tube to be heated to 1700°C and annealed at this temperature. The insulation and construction materials of the furnace are chosen to ensure safe use and uninterrupted process operation. Both ends of the reactor tube are open, the upper end is connected tightly via the upper connector **9** to the process gas port **7** and the material feeder **5.** The lower end is connected tightly via the lower connector **10** to the quartz process tube **8** with an outer diameter of φ20mm. The quartz process pipe is heated over a 250mm section by outlet heater **2.** The position of heater **2** in relation to the quartz process pipe is adjustable to the extent necessary to maintain process parameters. The preheater is constructed in such a way as to allow the aforementioned tube to be heated to 1000°C and annealed at this temperature. The insulation and construction materials of the preheater are chosen to ensure safe use and uninterrupted process operation. The other end of the quartz process pipe is framed by a water-jacketed head **11,** to which a tubular water cooler **12** is bolted; behind the cooler is a gas outlet nozzle **13** and a product tank **14.**

The gas feed assembly **3** is responsible for ensuring that the gas supplied to the system has the correct flow rate and thermal parameters for the process. The gas flow rate is regulated by a rotameter **15.** The gas heater assembly **4** heats a part of the dosing system - in other words, the heater reactor **16,** built from two centrally placed pipes of different diameters, in which the flowing gas stream is heated. The heater assembly is constructed in such a way as to allow the aforementioned heater reactor to be heated up to 1000°C and annealed at this temperature. The insulation and construction materials of the heater are chosen to ensure safe use and uninterrupted operation of the process.

The material feeder **5** is positioned above the process gas port 7. It is constructed in such a way as to ensure stable and continuous dosing of the correct amount of feed material.

Control over the operation of the station is provided by a PLC-based control system **17**.

The water cooler (water/air exchanger) **6** supplies cooling water to the tube cooler **12** and the water jacket of the head **11**.

**Example 2**

The feed material is dosed through the material feeder **5** placed above the furnace unit **1** and falling into the vertically positioned ceramic process tube **18** is heated in the heating zone of the furnace unit to the required temperature for the process. The temperature depends on the feed material. Usually the temperature is higher than the eutectic temperature of that material. For $Bi_2O_3$-Ag this was 1500°C, while for $ZnO$-$ZnWO_4$ it is 1400°C. It then drops into the quartz process tube **8** where it is heated in the heating zone of outlet heater **2** to the temperature required for the next process step, with the temperature usually set to a maximum 1000°C. The location of the outlet heater **2** vertically relative to the quartz process tube **8** is adjusted to the extent necessary to maintain the process parameters. In the subsequent descent phase, the feed material (product) descends through the tubular cooler **12** into the product tank **14.** The entire process takes place in a gas shield, the gas flow being regulated by a rotameter **15.** Before entering the process space, the gas is heated in the gas heater assembly **3.** The gas is fed into the process space from above, in line with the material flow direction, and flows out from below through the outlet connector **13.**

**Example 3**

The furnace unit **1** consists of an external structure **1.1** made of structural steel, inside of which an insulation unit **1.2** is built, externally covered with a stainless steel casing. The insulation unit consists of a composition of insulating plates with suitably selected thermal and strength parameters, which form the high-temperature chamber of the furnace. The outer plates are insulating plates based on fibrous materials containing $Al_2O_3$ and $SiO_2$ manufactured by Czylok. The inner plates, which form the actual heating chamber, are high-temperature vacuum-formed plates consisting of $Al_2O_3$ and $SiO_2$. The insulating plates have been selected to ensure the best possible insulating properties and the lowest possible energy consumption. The inlet and outlet diameters of the furnace chamber were matched to the diameter of ceramic process tube **18.** Two heaters made of $MoSi_2$ type 'U' **1.3** with an operating temperature of 1750°C were built into the insulation unit. The current connections of the heaters **1.4** were built into the top of the isolation assembly. This space is cooled by a fan unit **1.6** to maintain the correct temperature measurement and power supply parameters. At an angle, a double PtRh10-Pt (type 'S') temperature sensor in $Al_2O_3$ sheath **1.5** has been inserted into the furnace working chamber to act as a control sensor and temperature fuse sensor to protect the furnace from exceeding the maximum temperature.

**Example 4**

The gas heater assembly **4** is built in the form of a split tube furnace, double-burner **4.1,** with an inner diameter of the heating module $\phi$48mm, inside of which a reactor **4.2** made of heat-resistant steel of grade 1.4841 is built in. The gas inlet to the reactor is located at the bottom of the reactor and is connected by a flexible hose to the gas feed assembly 3, the outlet of the heated gas is located at the top of the reactor and is connected to the process gas port 7. The gas heater is designed for operation at a maximum temperature of up to 1000°C. The furnace heating elements are made of Kanthal resistance wire and are embedded in fibre-based insulation modules containing $Al_2O_3$ and $SiO_2$ manufactured by Czylok. The temperature control of the furnace operation is performed by a NiCr-NiAl (type 'K') **4.3** temperature sensor. The double-barrel construction of the heater unit allows easy inspection of the condition of the heater exchanger and servicing.

**Example 5**

The gas feed assembly **3** consists of a stainless steel housing **3.1,** inside of which a rotameter **3.2** with a gas (argon) flow range of 4-24 Nl/min and an electrovalve **3.3** are built in, the opening of which can be controlled depending on the selected programme. At the rear of the structure, suitable bulkhead connectors for the gas inlet and outlet and supply choke **3.4** are built in. Gas feed assembly **3** should be supplied with argon gas at a maximum pressure of 1.2 bar. The outlet port of the gas feed unit is connected by a flexible hose directly to the reactor inlet **4.2** of the gas heater. All fasteners and flow elements used are rated for operation at elevated temperatures.

**Example 6**

The outlet heater **2,** like the gas heater assembly **4,** is built in the form of a split tube, double-arc furnace **2.1,** with an inner diameter of the heating module $\phi$40mm and is designed for operation at a maximum temperature of up to 1000°C. The furnace's heating elements are made of Kanthal resistance wire and are embedded in fibre-based insulation modules containing $Al_2O_3$ and $SiO_2$ manufactured by Czylok. A NiCr-NiAl (type 'K') **2.2** temperature sensor, which is inserted parallel to the axis of the furnace through its front section, is responsible for controlling the furnace's operating temperature. The two-barrel design of the outlet heater allows for easy inspection of the quartz process tube **8** and servicing. The diameters of the preheater end sections have been matched to the diameter of the quartz process tube **8.** The outlet heater **2** assembly has been mounted on a helical sliding mechanism with a stroke of 250 mm and is located directly under the furnace. The designed stroke allows the selection of a suitable temperature zone at the height of the reactor to be modified.

**Example 7**

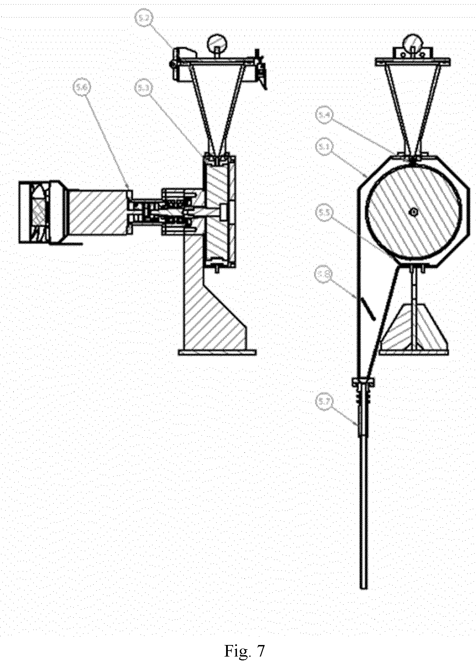

The material feeder **5** is made of a stainless steel structure **5.1** made of 3 mm thick sheets welded together - as shown in Fig. 7, on top of which a material tank **5.2** with the volume necessary for the process is built in. Access to the material tank **5.2** is provided by a sealed cover. The working element of the feeder, which is essential for precise feeding, is the transport wheel **5.3,** onto which the material is dosed through replaceable tank **5.4.** The tank **5.4** have replaceable nozzles, thanks to which the material feed diameter from the material feeder **5** can be changed.

In the construction of the material feeder **5** several possibilities of determining the parameters of the feeding efficiency have been designed, which allow for conducting processes with different intensity. These are:

- a transport wheel **5.3** designed in a manner adapted to the granulation, material density and the required amount of material fed in a unit of time - with an appropriate profile, diameter and width,
- a replaceable nozzle of the hopper **5.4,** thanks to which we can change the material discharge diameter from the material feeder **5** to the transport wheel, and thus the amount of material discharged,
- the possibility of setting the distance between the nozzle of the hopper and the transport wheel, thanks to which the speed of material discharge onto the transport wheel can be adjusted. This distance can be set using a spacer plate placed directly under the hopper mount or by replacing the hopper with a shorter or longer one, depending on the needs of the process being carried out,
- automation parameters, with which we can regulate the rotational speed of the transport wheel, and thus the speed of emptying the wheel of material.

In the lower part of the material feeder housing, a scraper **5.5** is built in, which cleans the rotating transport wheel from the accumulated material and pours the material directly into the transport tube **5.7,** which is then connected to the upper connector **9.** A special partition **5.8** is built between the scraper **5.5** and the transport tube **5.7,** - a rectangular stainless steel sheet with a precisely defined angle of inclination and mounting location, designed to separate the transport mechanism from the radiated heat from the furnace and to protect the physical properties of the dispensed material from changes in temperature. Access to the interior of the material feeder **5** for cleaning or replacing components is provided through a sealed cover built into its front, which also has a peephole. The bearing-mounted drive shaft of the transport wheel is connected by a clutch to the engine **5.6,** which drives the entire material feeder **5.**

**Example 8**

The control system **17** is built on the basis of a PLC controller and is equipped with appropriate input/output cards so that it is possible to control the heating system of the furnace **1,** gas heater assembly **4,** gas feed assembly **3,** outlet heater **2** and material feeder **5.** Thanks to the solutions used, the operator can set the temperature parameters of the furnace in such a way as to properly and safely carry out the process. Similarly, the parameters of the amount of gas supplied, as well as the material dosed can be selected depending on the process being carried out. The operator has a continuous view of the working parameters of the station and additionally, thanks to the additional temperature sensor used, which acts as a fuse protecting the furnace from exceeding the maximum working temperature, there is no fear that the maximum working temperature of the furnace will be exceeded. All operating parameters of the device, including in particular the temperature and amount of gas and material supplied, are archived, thanks to which the operator can return to the archived data at any time.

The additional elements used, such as process gas heating and an additional heater unit with a long heating zone, enable the extension of the high-temperature area in which the material is melted, which translates into uniform melting of the charge material, the eutectic temperature of which is no higher than 1700 °C.

**Example 9**

A method of obtaining eutectic material other than metal-metal in the form of microspheres in a vertical tube furnace in a continuous manner is as follows: the input material is dosed through a material feeder **5** placed above the furnace 1 and, falling into a vertically positioned ceramic process tube **18,** is heated in the heating zone of the furnace assembly to the temperature required for the process, then falls into a quartz process tube **8** where it is heated in the heating zone of the outlet heater **2** to the temperature required in the next stage of the process and then in the next phase of falling, the input material falls in the form of a microsphere through a tubular cooler **12** to the product tank **14,** wherein the method is carried out in a gas shield.

The size of the microspheres depends on how finely divided the input material is. The input material is a crushed eutectic fiber, which is previously obtained by the micro-pulling method. The crushed rod is then sieved using a 32 μm mesh sieve (this removes dust before the process). The production process produces microspheres of various sizes, with diameters ranging from ~30 to ~200 μm, with an average size of ~90 μm. The average size of the microspheres was estimated from optical microscope images using a lognormal distribution function fitted to the particle size distribution histogram, according to the formula:

$$f(D) = \left( \frac{1}{\sqrt{2\pi}\sigma_D} \right) \exp\left[ -\frac{\ln^2\left(\frac{D}{D_0}\right)}{2\sigma^2} \right]$$

where $D_0$ is the mean diameter and $\sigma$ is the dispersion. The mean diameter $\langle D \rangle = D_0 \cdot \exp(\sigma^2/2)$ and the standard deviation $\sigma D = \langle D \rangle \cdot [\exp(\sigma^2) - 1]^{1/2}$.

The efficiency is at the level of 50% (weight of the input material to the weight of the obtained microspheres).

## Claims

1. A vertical tube furnace for obtaining eutectic material other than metal-metal in the form of microspheres, comprising interconnected assemblies: furnace assembly (1), gas heater assembly (4), gas feed assembly (3), outlet heater (2), water cooler product tank (14) wherein, it contains a material feeder (5) and includes a ceramic process pipe (18) embedded vertically inside the furnace unit (1) with outer diameter φ20mm and further a quartz process pipe (8) with outer diameter φ20mm embedded vertically inside the furnace unit (1), the ceramic process pipe (18) and the quartz process pipe (8) being connected to each other by a bottom connector (10); the upper end of the ceramic process pipe (18) is tightly connected by means of a upper connector (9) to the process gas port (7) and the feedstock feeder port (5), while the other end of the quartz process pipe is framed by a water-jacketed header (11) to which a tubular water cooler (12) is screwed, followed by a gas outlet connector (13) and a product tank (14); whereby the outlet heater (2) is positioned at the height of the quartz process pipe (8).

2. The furnace according to claim 1, **characterised in that** the material feeder (5) is positioned above the process gas port (7).

3. The furnace according to claim 1, **characterised in that** the material feeder (5) consists of a stainless steel housing, on top of which there is a material container (5.2) from which material is dispensed onto the rotating transport wheel (5.3), while in the lower part of the structure there is a scraper (5.5) which cleans the rotating transport wheel (5.3) of accumulated material and discharges the material directly into the transport tube (5.7).

4. The furnace according to claim 1, **characterised in that** it comprises a control system (17) built on the basis of a PLC.

5. The furnace according to claim 1 **characterised in that** the water cooler supplies cooling water to the tube cooler (12) and the head water jacket (11).

6. The furnace according to claim 1 **characterised in that** the process gas port (7) is equipped with a rotameter (15) and a gas heater unit (4).

7. A method to obtain eutectic material other than metal-metal in the form of microspheres in a vertical tube furnace according to any of the claims 1-6, in a continuous manner with the following characteristics: the feed material is dispensed through a feeder (5) placed above the furnace unit (1) and falling into a vertically positioned ceramic process tube (18) is heated in the heating zone of the furnace unit to the temperature required for the process, then falls into the quartz process tube (8) where it is heated in the heating zone of the outlet heater (2) to the temperature required for the subsequent process step and then, in the subsequent descent phase, the feed material falls in the form of microsphere through the tubular cooler (12) into the product container (14), while the process is carried out under a gas shield.

8. The method according to claim 7, **characterised in that** the feedstock is a crushed eutectic rod which is previously obtained by means of a microextraction method.

9. The method according to claim 7, **characterised in that** it is carried out in an atmosphere of argon or nitrogen or helium.

10. The method according to claim 7, **characterised in that** microspheres are formed which are ~30 to ~200 μm in diameter, the average size being ~90 μm, which is measured as specified in the description.

## Patentansprüche

1. Vertikaler Rohrofen zur Herstellung von eutektischem Material außer Metall-Metall in Form von Mikrokugeln, umfassend die miteinander verbundenen Anordnungen Ofenanordnung (1), Gaserhitzeranordnung **(4)**, Gaszuführanordnung **(3)**, Auslasserhitzer **(2)**, Wasserkühler Produkttank **(14)**, wobei er eine Materialzuführvorrichtung **(5)** enthält und ein Keramik-Arbeitsrohr **(18)** mit Außendurchmesser φ 20mm, das vertikal in die Ofeneinheit **(1)** eingelassen ist, und ferner ein Quarz-Arbeitsrohr **(8)** mit Außendurchmesser φ 20mm, das vertikal in die Ofeneinheit **(1)** eingelassen ist, umfasst, wobei das Keramik-Arbeitsrohr **(18)** und das Quarz-Arbeitsrohr **(8)** durch ein unteres Verbindungsstück **(10)** miteinander verbunden sind; wobei das obere Ende des Keramik-Arbeitsrohrs **(18)** mithilfe eines oberen Verbindungsstücks **(9)** dicht mit dem Prozessgasanschluss **(7)** und dem Beschickungsmaterialzuführanschluss **(5)** verbunden ist, während das andere des Quarz-Arbeitsrohrs von einem Wassermantel-Kopfbereich **(11)** umrahmt wird, mit dem ein rohrförmiger Wasserkühler **(12)** verschraubt ist, gefolgt von einem Gasauslassverbindungsstück **(13)** und einem Produkttank **(14)**; wobei der Auslasserhitzer **(2)** auf der Höhe des Quarz-Arbeitsrohrs **(8)** angeordnet ist.

2. Ofen nach Anspruch 1, **dadurch gekennzeichnet, dass** die Materialzuführvorrichtung **(5)** über dem Prozessgasanschluss **(7)** angeordnet ist.

3. Ofen nach Anspruch 1, **dadurch gekennzeichnet, dass** die Materialzuführvorrichtung **(5)** aus einem Gehäuse aus rostfreiem Stahl besteht, auf dessen Oberseite sich ein Materialbehälter **(5.2)** befindet, aus dem Material auf das rotierende Transportrad **(5.3)** ausgegeben wird, während sich im unteren Teil der Konstruktion ein Schaber **(5.5)** befindet, der das rotierende Transportrad **(5.3)** von angesammeltem Material säubert und das Material direkt in das Transportrohr **(5.7)** abführt.

4. Ofen nach Anspruch 1, **dadurch gekennzeichnet, dass** er ein Steuersystem **(17)** umfasst, das auf der Basis einer SPS aufgebaut ist.

5. Ofen nach Anspruch 1, **dadurch gekennzeichnet, dass** der Wasserkühler den Rohrkühler **(12)** und den Kopfwassermantel **(11)** mit Kühlwasser versorgt.

6. Ofen nach Anspruch 1, **dadurch gekennzeichnet, dass** der Prozessgasanschluss **(7)** mit einem Rotameter **(15)** und einer Gaserhitzereinheit **(4)** ausgestattet ist.

7. Verfahren zur Herstellung von eutektischem Material außer Metall-Metall in Form von Mikrokugeln in einem vertikalen Rohrofen nach einem der Ansprüche 1 bis 6 in kontinuierliche Weise mit den folgenden Eigenschaften: das Beschickungsmaterial wird durch eine über der Ofeneinheit **(1)** angeordnete Zuführvorrichtung **(5)** ausgegeben und in ein vertikal positioniertes Keramik-Arbeitsrohr **(18)** fallend in der Heizzone der Ofeneinheit auf die für den Prozess erforderliche Temperatur erhitzt, dann fällt es in das Quarz-Arbeitsrohr **(8)**, wo es in der Heizzone des Auslasserhitzers **(2)** auf die für den nachfolgenden Prozessschritt erforderliche Temperatur erhitzt wird, und dann, in der nachfolgenden Sinkphase, fällt das Beschickungsmaterial in Form von Mikrokugeln durch den rohrförmigen Kühler **(12)** in den Produktbehälter **(14)**, während der Prozess unter Schutzgas durchgeführt wird.

8. Verfahren nach Anspruch 7, **dadurch gekennzeichnet, dass** das Beschickungsmaterial ein zerkleinerter eutektischer Stab ist, der zuvor mittels eines Mikroextraktionsverfahrens hergestellt wurde.

9. Verfahren nach Anspruch 7, **dadurch gekennzeichnet, dass** es in einer Atmosphäre aus Argon oder Stickstoff oder Helium durchgeführt wird.

10. Verfahren nach Anspruch 7, **dadurch gekennzeichnet, dass** Mikrokugeln gebildet werden, die einen Durchmesser von ~30 bis ~200 μm haben, wobei die Durchschnittsgröße ~90 μm beträgt, die wie in der Beschreibung angegeben gemessen wird.

## Revendications

1. Four à tube vertical destiné à obtenir un matériau eutectique autre qu'un métal-métal sous forme de microsphères, comprenant des ensembles interconnectés : un ensemble four (1), un ensemble chauffage au gaz (4), un ensemble d'alimentation en gaz (3), un élément chauffant de sortie (2), un réservoir de produit (14) de refroidisseur d'eau dans lequel, il contient un distributeur (5) de matériau et comporte un tuyau de processus en céramique (18) d'un diamètre extérieur Ø de 20 mm encastré verticalement à l'intérieur de l'unité de four (1), ainsi qu'un tuyau de processus en quartz (8) d'un diamètre extérieur Ø de 20 mm encastré verticalement à l'intérieur de l'unité de four (1), le tuyau de processus en céramique (18) et le tuyau de processus en quartz (8) étant connectés l'un à l'autre par un connecteur inférieur (10) ; l'extrémité supérieure du tuyau de processus en céramique (18) est connectée hermétiquement au moyen d'un connecteur supérieur (9) au port de gaz de processus (7) et au port de distributeur (5) de charge d'alimentation, tandis que l'autre extrémité du tuyau de processus en quartz est encadrée par une embase à chemise d'eau (11) à laquelle est vissé un refroidisseur d'eau (12) tubulaire suivi d'un connecteur de sortie de gaz (13) et d'un réservoir de produit (14) ; ce qui permet de positionner l'élément chauffant de sortie (2) à la hauteur du tuyau de processus en quartz (8).

**2.** Four selon la revendication 1, **caractérisé en ce que** le distributeur (5) de matériau est positionné au-dessus du port de gaz de processus (7).

**3.** Four selon la revendication 1, **caractérisé en ce que** le distributeur (5) de matériau se compose d'un boîtier en acier inoxydable sur le haut duquel se trouve un conteneur de matériau (5.2) à partir duquel un matériau est distribué sur la roue de transport rotative (5.3), tandis que dans la partie inférieure de la structure se trouve un racleur (5.5) qui nettoie la roue de transport rotative (5.3) du matériau accumulé et décharge le matériau directement dans le tube de transport (5.7).

**4.** Four selon la revendication 1, **caractérisé en ce qu'**il comprend un système de commande (17) construit sur la base d'un PLC [Contrôleur logique programmable].

**5.** Four selon la revendication 1, **caractérisé en ce que** le refroidisseur d'eau fournit de l'eau de refroidissement au refroidisseur de tube (12) et à l'embase à chemise d'eau (11).

**6.** Four selon la revendication 1, **caractérisé en ce que** le port de gaz de processus (7) est équipé d'un rotamètre (15) et d'une unité de chauffage au gaz (4).

**7.** Procédé d'obtention d'un matériau eutectique autre qu'un métal-métal sous forme de microsphères dans un four à tube vertical selon l'une des revendications 1 à 6, de manière continue présentant les caractéristiques suivantes : le matériau d'alimentation est distribué à travers un distributeur (5) placé au-dessus de l'unité de four (1) et tombant dans un tube de processus en céramique (18) positionné verticalement, il est chauffé dans la zone de chauffage de l'unité de four à la température requise pour le processus, puis il tombe dans le tube de processus en quartz (8) où il est chauffé dans la zone de chauffage de l'élément chauffant de sortie (2) à la température requise pour l'étape de processus ultérieure, puis lors de la phase de descente ultérieure, le matériau d'alimentation tombe sous forme de microsphères à travers le refroidisseur tubulaire (12) dans le conteneur de produit (14), tandis que le processus est réalisé sous un bouclier à gaz de protection.

**8.** Procédé selon la revendication 7, **caractérisé en ce que** la charge d'alimentation est une tige eutectique broyée qui est obtenue au préalable au moyen d'un procédé de microextraction.

**9.** Procédé selon la revendication 7, **caractérisé en ce qu'**il est mis en œuvre dans une atmosphère d'argon, d'azote ou d'hélium.

**10.** Procédé selon la revendication 7, **caractérisé en ce que** les microsphères qui sont formées ont des diamètres de ~ 30 à ~ 200 $\mu$m, la taille moyenne étant de ~ 90 $\mu$m et étant mesurée comme spécifié dans la description.

inlet nozzle

outlet nozzle

water tank

drain nozzle

Fig. 1

measuring thermocouple socket

measuring thermocouple socket

A-A ( 1:15 )

Fig. 2

Fig. 3

Fig. 4

Fig. 5

Fig. 6

Fig. 7

Fig. 8

**EP 4 571 229 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104086074 A

- CN 110054396 A

**Non-patent literature cited in the description**

- **JONATHAN M. WARD et al.** Short vertical tube furnace for the fabrication of doped glass microsphere lasers. *Review of Scientific Instruments*, 2010, vol. 81, 073106